# EUROPEAN PATENT APPLICATION

(11) **EP 2 146 486 A1**
(43) Date of publication of application: **20.01.2010**
(21) Application number: 09007138.2
(22) Date of filing: 28.05.2009
(51) Int. Cl.: H04L 29/08

(54) **System and method for improving communications between vehicles**

(30) Priority: 30.05.2008 ES 200801638
(71) Applicant: Telefonica, S.A., 28013 Madrid (ES)
(72) Inventor: Lequerica, Iván, 28035 Madrid (ES)
(74) Representative: Gonzalez-Alberto Rodriguez, Natalia

(57) **Abstract**

The invention relates to a system and method for improving communications between vehicles, the objective of which is an overall improvement in communications between vehicles and to provide them with suitable security by means of using a cellular link and the capabilities of the operator, including IMS, as well as by using a secure cellular channel.

## Description

### Technical Field

The present invention relates to the area of the mobile and wireless communications in vehicular environments and, more particularly, to a system and a method for making communications between vehicles, also known as "VANET" (Vehicular Ad-Hoc Networks) or V2V (Vehicle to Vehicle) communications, more secure and efficient by means of the use of the IMS subsystem (IP Multimedia Subsystem).

### State of the Art

The vehicular environment has characteristics which make it especially complex for communications deployment:
- High number of nodes accessing the network simultaneously
- Typology that is dynamic and quite variable over time
- High speeds of the nodes
- Variable capacity of the wireless links
- Difficulty to provide secure communications; encryption, access control, authentication, privacy, non-repudiation, intrusion detection, etc.

As a result, an enormous effort (in research, standardization and promotion) is being made at all levels for the purpose of having a reliable communications system which responds to the demanding requirements of the services in this environment.

With respect to wireless technologies (layers 1 and 2 of the OSI model), WAVE is being standardized (IEEE 802.llp) [project IEEE 802.11 Task Group p. Wireless Access in Vehicular Environments (WAVE). http://grouper.ieee.org/groups/802/11/Reports/tgp_update.htm]. WAVE has been designed within the Wi-Fi family to optimize its performance between on-board nodes in vehicles, with all this entails.

The objective of the European organization C2CCC (CAR 2 CAR Communication Consortium) [Car 2 Car Communications Consortium Manifesto. http://www.car-to-car.org/index.php?id=5701] is to promote the standardization and deployment of this type of systems to achieve interoperability at the European level allowing the deployment of road safety services. In the United States and Japan, there are parallel initiatives promoted by the governments based on a similar technology: DSRC (Dedicated Short Range Communications) [EN 12253:2004 Dedicated Short-Range Communication - Physical layer using microwave at 5.8 GFIz].

It is important to point out reference CALM architecture [CALM Architecture. ISO TC204 WG16. http://www.caim,hu/], in the process of being standardized by the ISO organization [ISO. International Organization for Standardization, http://www.iso.org/]. The objective of CALM is to provide the best connection to on-board nodes in all situations taking into account the requirements of each type of service. This concept, known as ABC (Always Best Connected), involves having several wireless and cellular technologies (WAVE, UMTS [UMTS. Universal Mobile Telecommunications System. http://www.3gpp.org/], WiMAX [WiMAX. IEEE 802.16e Task Group. http://www.ieee802.org/16/tge], RFID [RFID. Radio Frequency IDentification. http://www.epoglobalinc.org]...) and using them in a transparent manner for the user depending on the needs at any time.

In addition, the European Commission is promoting these technologies by means of the eSAFETY forum [eSAFETY Forum. http://www.esafetysupport.org/j of the i2010 Intelligent Car initiative [12010 Intelligent Car Initiative. http://europa.eu/scadplus/leg/in/lvb/I31103.htm] and funding research projects in this line, such as SAFESPOT [SAFESPOT Project, http://www.safespot-eu,org], CVIS [CVIS Project. http://www.cvisproject.org/], COOPERS [COOPERS Project. http://www.coopers-ip.eu/], PREVENT [PREVENT Project. http://www.prevent-ip.orq/], SEVECOM [SEVECOM Project. http://www.sevecom.org/] GST [GST Project, http://www.gstforum.org], CARTALK2000 [CARTALK2000 Project. http://www.cartalk2000.net/] and COM2REACT [COM2REACT Project, http://www.com2react-project.org/].

Nevertheless, the solutions proposed until now have been focused on providing the best type of connection to the on-board node at all times, not on optimizing communication between vehicles through VANE interface by means of the information obtained from a centralized system.

In addition, IMS capabilities are currently in the process of being standardized and adapted to operators' needs by different organizations (mainly 3GPP [3GPP. 3rd Generation Partnership Project. http://www.3gpp.org/], OMA (OMA. Open Mobile Alliance. http//www.openmobilealliance.org/] and Liberty Alliance [LibertyAlliance, http://www.projectliberty.org]). This means that it is the right time to propose new improvements and complements for the functionalities of said subsystem.

Several documents prior to the invention have been found in the state of the art, including:
International patent application number W02008/022142-A1, published on 21/02/2008 describes in its abstract a system and a method for managing wireless devices. The mobile device includes a cellular technology module 306 configured to communicate with a cellular network using cellular technology, and a module 308 configured to communicate with a broadband network using broadband technology. IMS services are provided in a broadband technology communications session over the broadband network.
This document does not describe the use of the mobile device for V2V communications, or the use of the capabilities of the operator to achieve the different functions that are described in the present invention such as, for example, automatically configuring the communication interface based on IEEE 802.11 and other functionalities included in the various claims.
United States patent application number US2007/0213078, published on 13/09/2007, describes a wireless communication method and system for initiating the establishment, modification and termination of broadcast and multicast bearer services using the Internet protocol multimedia subsystem (TMS).
However, in this system it is not mentioned that the mobile device has two interfaces, or that it uses the capabilities of the operator for the functions described in the present invention.
United States patent application number US2007/0198140, published on 23/08/2007, describes a system having, among other functionalities, at least one locator sub-system configured to determine the current position coordinates of the "host" vehicle at multiple points throughout the itinerary. The mobile device does not have two interfaces nor does it make use of the capabilities of any operator.

### Object of the Invention

For the purpose of an overall improvement of communications between vehicles, the present invention describes a method and a system for the quantitative improvement of vehicular communications performance and providing them with suitable security, characterized by the use of a cellular link and the capabilities of the operator, including IMS, and by the use of a secure cellular channel.

The main objects of the invention, a system and a method, are described in independent claims 1 and 7, respectively.

Further features and objects of the invention are described in the dependent claims.

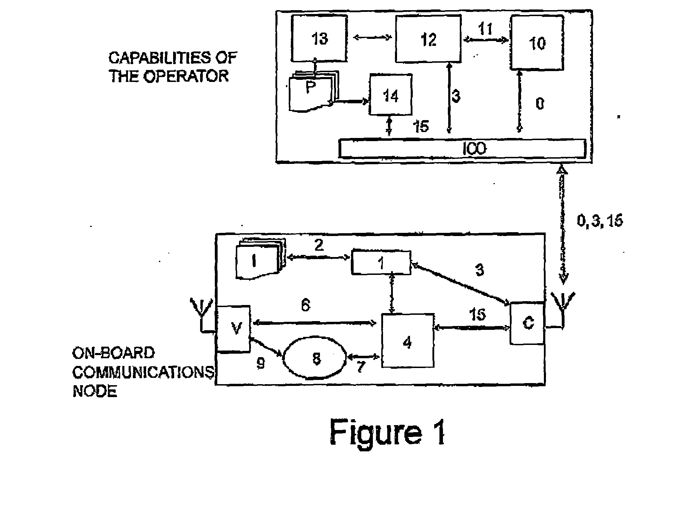

The system and method are defined in detail in the following description as well as in Figure 1.

### Brief Description of the Drawings

Figure 1 shows the block diagram of the system and method object of the present invention.

### Detailed Description of the Invention and Embodiment

The present invention relates to a system and a method for making communications between vehicles, VANET, more secure and efficient, using a cellular connection and the IMS subsystem among other operator capabilities.

The objective of this mechanism is to alleviate the deficiencies (mainly security, scalability and efficiency) of vehicular communications which presently prevent their implementation in an effective manner, as well as to facilitate the penetration in these environments of communication systems without having a high critical mass of vehicles with V2V communication capabilities.

The invention automatically performs the functions of obtaining data in a centralized manner by means of the IMS subsystem, storing the information, the processing thereof and ultimately sending enriched information to the different nodes which allows making the vehicular network secure and optimizing the performance thereof.

It is expected that IMS will be the environment for the deployment and management of services used by most communications operators at a worldwide level. For this reason, the use of this method in on-board nodes in vehicles will facilitate in the medium term the deployment of IMS-based services in the vehicular environment.

The invention consists in taking advantage of the capabilities of the telecommunications operator to inform on-board nodes in vehicles of the VANET network topology, the communications that the rest of the nodes have available, the services they use, and a prediction of their medium term performance. With this information the nodes will;
- Improve efficiency, automating the configuration process of the VANET network, reducing the connection establishment time, optimizing the finding of routes to the information destination and reducing the signaling overload in the network. It will also allow creating robust multihop channels for quality of service (QoS) assurance.
- Improve network security as it provides critical information through a secure channel. This information consists of;
   - Certificates of other nodes duly signed by a certifying agency, providing cross-authentication, access control and non-repudiation.
   - Pseudonyms of the node itself and of the rest of them providing privacy to the users.
   - Encryption keys to be used in the VANET wireless interface for the sake of privacy of the information.

The on-board nodes will have at least two wireless communication interfaces; one intended for Ad-Hoc communication between vehicles (VANET) typically by means of IEEE 802.11 family technology, and a cellular one which will connect at all times with the operator capabilities and by means of which it will obtain useful information for the VANET interface performance,

With respect to the infrastructure, the system will rely on capabilities of the operator, including elements of the IMS subsystem, able to compile information of the on-board nodes by means of their cellular interface, store the information, process it and send it on demand or periodically to all the nodes involved. This information may refer to the improvement of the security or the efficiency, including data about the vehicular network topology which the nodes will find in a certain geographic area in a certain time interval.

The invention consists of a system and a method for solving three specific problems in the vehicular Ad-Hoc communications (VANET):
- Interface configuration. In pure Ad-Hoc networks it is very complex to know the connection parameters necessary to access said network due to the absence of infrastructure.
- Interface security. In VANET communications channel security is a crucial aspect especially in order to offer road safety services. It is currently neither efficiently nor scalably resolved.
- Interface performance. Current routing protocols in VANET networks are highly inefficient due to the variable network topology and the high speeds of the nodes.

The present invention offers a solution to these problems by means of the use of a system characterized in that:
- The on-board communications nodes in the vehicles have at least two interfaces:
   An interface intended for VANET communication
   A cellular interface
- The on-board nodes use the capabilities of the operator, including IMS,
   As a result of the cellular interface and the access to the capabilities of the operator, the on-board nodes are able to:
- Automatically, quickly and securely configure the VANET interface, using data stored in the capabilities of the operator which they download through the cellular channel.
- Provide by means of a secure cellular channel all the security information for the VANET interface: encryption keys and digital certificates.
- Improve VANET network performance with actual updated network topology information, reducing communication delays and reducing the control information load.

The operation of the system and the method object of the invention is detailed in the following steps:

The on-board communications node which wants to use the system and method object of the invention must initially be connected to the cellular network to be able to access the capabilities of the operator, IMS or others.

The capabilities of the operator will authenticate the user by making use of the SIM-based (USIM-based in the case of UMTS) mechanisms. Once this is done, the VANET interface configuration information (addressing and security information) will be generated and sent through the UMTS connection requesting from the authenticated node the necessary information for the method.

After receiving the configuration data through the cellular interface, the on-board node suitably configures its VANET interface and sends the following information to the capabilities of the operator:
On-board terminal and equipment profile. Information about the processing capability, available communication interfaces, on-board sensors
Type of vehicle: Private, public transport, freight transport, emergency vehicle, traffic authorities, etc.
Position and speed. Data obtained from the vehicle locating system. It is valuable to obtain the average speed to estimate future vehicle performance
Route. Obtained by means of the on-board navigation system. Necessary for known which roads the vehicle will travel on to its destination
Information about the type of service of interest for the occupants. Important to known the preferences of the services to be used (road safety, traffic information, infotainment).

Use of resources. Percentage of communications resources currently used as well as historic data providing statistics for the purpose of predicting the possibilities of having the VANET interface of said node available for a future Ad-Hoc connection.

If any of the nodes is not able to send all the fields, the system will use only those fields achieved, being advisable to provide the maximum number of fields to optimize the proposed system performance.

After this information is collected by the capabilities of the operator, it will be processed together with the data existing up until that time from the rest of the nodes forming the vehicular network.

By processing the data the PHOTO concept is obtained, consisting of vehicular network topology information, i.e., the geographic position in which the vehicles will be located in a short-medium term, as well as a use estimate of its communication capabilities. PHOTO also provides, through the secure cellular channel, information relating to the security of the nodes which a certain vehicle will find (certificate, pseudonyms and encryption keys), such that it reduces the overload in order to obtain a secure vehicular channel.

Once the system has a new version of PHOTO, it will be broken down into different PHOTOs, associated to different roadway sections, and they are made to reach the nodes considering the geographic area in which they are located.

A periodic mechanism having a frequency that can be configured by the system administrator will be responsible for updating the node data, improving the traffic situation prediction and updating the PHOTO.

The PHOTOs can be obtained on demand from the nodes when required by the users or the services, but also in a periodic and orderly manner, optimizing the operator's resources in order to make this information reach the nodes as efficiently as possible, by means of broadcast or multicast mechanisms.

The system is described below and the embodiment of the method is proposed based on a series of functional modules in the operator's infrastructure and in the on-board nodes in vehicles:
- In the capabilities of the operator:
   Security module (10). Responsible for authenticating the node by means of SIM-USIM-based mechanisms and generating the node security information (pseudonyms, certificates and encryption keys) and passing them (11) to the collection module (12).
   Collection module (12), based on standardized capabilities, which allows automatically collecting (3) and storing relevant data of the on-board nodes (1) as well as critical security data generated by the security module. This module will compile the information every time a node wants to access the system and periodically in order to make the network topology estimates precise.
   Prediction module (13) to predict the situation of the system nodes. This element, based on the periodic data it receives from the nodes, estimates the short-medium term situation and reflects it, including security data, in a preestablished format called PHOTO. It is subsequently subdivided into geographic areas such that there is a single PHOTO (P) for each roadway segment.
   Module for distributing information about the vehicular network topology or PHOTOs (14). It is responsible for making the PHOTO (or PHOTOs) or information about the vehicular network topology of interest, depending on the geographic area through which the vehicle will be traveling, reach all the system nodes (15), or where appropriate those nodes which are subscribed to the service, thus optimizing processing time and minimizing overload in the network.
   Interface between the operator capabilities and the cellular network (ICO).
- In the on-board node in vehicles:
   Cellular interface (C). Necessary for the initial authentication in the system (0) by means of SIM-USIM-based mechanisms
   Sensor module (1), Able to obtain (2) the relevant information of the node (1), process it and send it (3) in the suitable format by means of the cellular interface (C) to the collection module in the operator.

Configuration module (4). Able to request and obtain (15) the PHOTOs from the distribution capability in the operator. From PHOTO:
The VANET interface (V) is configured (or reconfigured) (6), including addressing, information about nearby gateways and security parameters (encryption keys, asymmetrical certificates of the nodes and pseudonyms).
It adapts the PHOTO data to obtain the network topology as well as a prediction of the available resources, transmitting them (7) to the VANET module through a well-defined interface.
VANET Module (8): Responsible for routing the information (9) in the vehicular network in the most efficient manner, minimizing delays and optimizing the bandwidth and the percentage of packets transmitted successfully. It takes into consideration the needs of the services that the node is using and it has an interface (7) to enrich its internal mechanisms with the information of the PHOTOs from the configuration module. The module provides a first approximation of the optimal route to the destination node, with realistic estimates of the obtainable QoS levels. This route can be optimized periodically with new updated PHOTOs and with direct information from the VANET itself.

## Claims

1. A system for the quantitative improvement of vehicular communications performance, reducing connection establishment time, optimizing the finding of routes to the destination and reducing the signaling overload, and for providing security (authentication, privacy and encryption) in vehicular communications between the vehicles or on-board nodes, **characterized in that** it comprises a cellular link between at least two nodes, using a secure cellular channel, and an IMS subsystem, provided by the capabilities of a telecommunications operator.

2. The system according to claim 1, **characterized in that** the operator comprises at least the following components:
- Security module (10),
- Collection module (12),
- Prediction module (13),
- Module (14) for distributing information about the vehicular network topology or PHOTO, and
- Interface (ICO) between the operator capabilities and the cellular network.

3. The system according to claim 1, **characterized in that** the on-board nodes comprise at least the following components:
- Cellular interface (C),
- Sensor module (1),
- Configuration module (4),
- VANET module (8),
- VANET interface (V).

4. The system according to claims 1 to 3, **characterized in that** the on-board nodes have at least two wireless communication interfaces, one intended for Ad-Hoc communication between vehicles (VANET) typically by means of IEEE 802.11 family technology and a cellular one which will connect at all times with the operator capabilities and by means of which it will obtain useful information for the VANET interface performance.

5. The system according to claims 1 to 4, **characterized in that** for each geographic area and the nodes located therein, there is a version of the information about the vehicular network topology or PHOTO.

6. The system according to claims 1 to 5, **characterized in that** it has a standard interface for the different VANET protocols designed by the scientific community, such that they can use the functionalities of the system in general and the information about the vehicular network topology or PHOTO in particular.

7. A method for the quantitative improvement of vehicular communications performance, reducing connection establishment time, optimizing the finding of routes to the destination and reducing the signaling overload, and for providing security (authentication, privacy and encryption) in vehicular communications between the vehicles or on-board nodes, **characterized in that** it consists of the following steps:
1) Initially connecting the on-board communications node in a vehicle to a cellular network in order to be able to access different capabilities, such as IMS or others, of a telecommunications operator,
2) Authenticating the user or not by means of the capabilities of the operator, to subsequently generate and send, once authenticated, the VANET interface configuration information (addressing and security information), requesting from the authenticated node the necessary information,
3) The on-board node configuring, after receiving the configuration data through the cellular interface, its VANET interface and sending information to the capabilities of the operator,
4) Collecting information by the capabilities of the operator, and processing all the information together with the data existing up until that time from the rest of the nodes forming the vehicular network,
5) obtaining after previous data processing the vehicular network topology information or PHOTO,
6) Breaking down the vehicular network topology information or PHOTO once the system has a new version of the latter into different parts associated to different roadway sections and sending the different parts to the nodes considering the geographic area in which they are located,
7) Updating the node data, improving the traffic situation prediction and updating the topology vehicular information or PHOTO by means of a periodic mechanism having a frequency that can be configured by the system administrator, and
8) Obtaining the topology vehicular information or PHOTOs on demand from the nodes either when required by the users or services or in a periodic and orderly manner.

8. The method according to claim 7, **characterized in that** the authentication of step 2 is carried out by using SIM-based mechanisms, or USIM-based mechanisms in the case of UMTS, and sending the VANET interface configuration information through a UMTS connection.

9. The method according to claim 7, **characterized in that** the information sent in step 3 to the capabilities of the operator can consist of all or some of the following fields or characteristics: On-board terminal and equipment profile; Type of vehicle; Position and speed; Route; Information about the type of service of interest for the occupants; and Use of resources.

10. The method according to claim 9, **characterized in that** if any of the nodes is not able to send all the fields, the system will use only those fields achieved, being advisable to provide the maximum number of fields to optimize the proposed system performance.

11. The method according to claim 7, **characterized by** using a cellular link between at least two nodes, a secure cellular channel and an IMS subsystem provided by the capabilities of a telecommunications operator.

12. The method according to claims 7 to 11,
**characterized in that** it collects and stores in a centralized manner the relevant vehicle information by means of the use of a secure cellular channel and of the capabilities of the operator, including IMS.

13. The method according to claims 7 to 12,
**characterized by** configuring the communications interface based on IEEE 802.11 of a node, by means of using a cellular channel, obtaining data of a capability of the operator and configuring this data in an automatic manner in the node interface.

14. The method according to claims 7 to 13,
**characterized by** predicting the geographic location of the vehicles or nodes in a certain geographic area and in certain time instants by means of using the information collected periodically by means of the cellular link of the on-board nodes and the capabilities of the operator.

15. The method according to claims 7 to 14,
**characterized by** generating a digital file with the vehicular topology information or PHOTO, and by having information for the prediction of: the location of the on-board nodes in the vehicles; the communication resources available to said nodes and security information of the communications (pseudonyms, keys and certificates), the method being based on the information previously compiled and stored in capabilities of the operator, including IMS.

16. The method according to claims 7 to 15,
**characterized by** improving routing in the VANET interface of the on-board node, optimizing the searching time for routes towards destination nodes, and by the use of the information received in the PHOTO of its geographic area.
